# EUROPEAN PATENT SPECIFICATION

(11) **EP 3 767 548 B1**
(45) Date of publication and mention of the grant of the patent: **05.03.2025**
(21) Application number: 20179117.5
(22) Date of filing: 10.06.2020
(51) Int. Cl.: G06N 3/082, G06N 3/045, G06N 3/063, G06N 20/00, G06N 3/084, G06N 3/044, G06N 3/048

(54) **DELIVERY OF COMPRESSED NEURAL NETWORKS**
BEREITSTELLUNG VON KOMPRIMIERTEN NEURONALEN NETZEN
FOURNITURE DE RÉSEAUX NEURONAUX COMPRIMÉS

(30) Priority: 03.07.2019 FI 20195607
(43) Date of publication of application: 20.01.2021
(73) Proprietor: Nokia Technologies Oy, 02610 Espoo (FI)
(72) Inventor: AYTEKIN, Caglar, 33580 Tampere (FI); CRICRI, Francesco, 33100 Tampere (FI)
(74) Representative: Papula Oy

(56) References cited:
- EP-A1- 3 614 316
- WO-A1-2018/121282
- WO-A1-2019/114517
- US-A1- 2018 260 687
- YAT HONG LAM ET AL: "Compressing Weight-updates for Image Artifacts Removal Neural Networks", ARXIV.ORG, CORNELL UNIVERSITY LIBRARY, 201 OLIN LIBRARY CORNELL UNIVERSITY ITHACA, NY 14853, 14 June 2019 (2019-06-14), XP081370895

## Description

### TECHNICAL FIELD

The present application generally relates to artificial intelligence, machine learning, and neural networks. In particular, some embodiments of the present application relate to delivery of compressed representations of neural networks.

### BACKGROUND

Neural networks (NN) may be utilized for many different applications in many different types of devices, such as mobile phones. Examples of technologies include image and video analysis and processing, social media data analysis, device usage data analysis, or the like. A neural network is a computation graph comprising several layers of computation. A layer may comprise one or more units, for example nodes. Each unit may be configured to perform an elementary computation. A unit may be connected to one or more other units and this connection may be associated with a weight. The weight may be used for scaling the signal passing through the associated connection. Weights are an example of learnable parameters, which may be updated during a training process to train the neural network for a particular task. Running neural networks at a device or delivering neural networks between devices may require significant memory or bandwidth resources, which may not always be available. Document "Compressing Weight-updates for Image Artifacts Removal Neural Networks" by Yat Hong LAM et al. (arXiv:1905.04079v2) presents an approach for fine-tuning a decoder-side neural network in the context of image compression, such that the weight-updates are better compressible. Document WO 2018/121282 A1 relates to requesting a neural network model for processing a cognitive computing task and receiving a second neural network model obtained by trimming the first neural network model.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter.

Example embodiments provide a system, where compressed neural networks may be efficiently delivered between devices, from a server to a client. This is achieved by the features of the independent claims. Further implementation forms are provided in the dependent claims, the description, and the drawings.

According to a first aspect, a server device comprises at least one processor; and at least one memory including computer program code; the at least one memory and the computer program code configured to, with the at least one processor, cause the server device at least to: receive a request for a neural network from a client device, wherein the request comprises at least one requirement for the neural network; obtain a first compressed neural network based on the at least one requirement; transmit the first compressed neural network to the client device; obtain a residual between at least a subset of the first compressed neural network and at least a subset of the second compressed neural network in response to receiving, from the client device or a third-party device, an indication that the first compressed neural network does not satisfy a performance requirement, wherein the first compressed neural network and the second compressed neural network are configured to perform a same task, wherein the second compressed neural network is obtainable based on adding the residual to the first compressed neural network, and wherein a size and performance of the second compressed neural network are higher than a size and performance of the first compressed neural network; and transmit the residual to the client device.

According to a second aspect, a method comprises receiving, by a server device, a request for a neural network from a client device, wherein the request comprises at least one requirement for the neural network; obtaining a first compressed neural network based on the at least one requirement; transmitting, by the server device, the first compressed neural network to the client device; obtaining, by the server device, a residual between at least a subset of the first compressed neural network and at least a subset of the second compressed neural network in response to receiving, from the client or a third-party device, an indication that the first compressed neural network does not satisfy a performance requirement, wherein the first compressed neural network and the second compressed neural network are configured to perform a same task, wherein the second compressed neural network is obtainable based on adding the residual to the first compressed neural network, and wherein a size and performance of the second compressed neural network is higher than a size and performance of the first compressed neural network; and transmitting, by the apparatus, the residual to the client device.

According to a third aspect, a computer program is configured, when executed by a served device, to cause the server device at least to: receive a request for a neural network from a client device, wherein the request comprises at least one requirement for the neural network; obtain a first compressed neural network based on the at least one requirement; transmit the first compressed neural network to the client device; obtain a residual between at least a subset of the first compressed neural network and at least a subset of the second compressed neural network in response to receiving, from the client or a third-party device, an indication that the first compressed neural network does not satisfy a performance requirement, wherein the second compressed neural network is obtainable based on adding the residual to the first compressed neural network, and wherein a size and perfomance of the second compressed neural network is higher than a size and performance of the first compressed neural network; and transmit the residual to the client device.

According to a fourth aspect, an apparatus comprises means for receiving a request for a neural network from a client device, wherein the request comprises at least one requirement for the neural network; means for obtaining a first compressed neural network based on the at least one requirement; means for transmitting the first compressed neural network to the client device; means for obtaining a residual between at least a subset of the first compressed neural network and at least a subset of the second compressed neural network in response to receiving, from the client or a third-party device, an indication that the first compressed neural network does not satisfy a performance requirement, wherein the second compressed neural network is obtainable based on adding the residual to the first compressed neural network, and wherein a size and perfomance of the second compressed neural network is higher than a size and performance of the first compressed neural network; and means for transmitting the residual to the client device.

According to a fifth aspect, a client device comprises at least one processor; and at least one memory including computer program code; the at least one memory and the computer program code configured to, with the at least one processor, cause the client device at least to: transmit a request for a neural network to a server device, wherein the request comprises at least one requirement for the neural network; receive a first compressed neural network; provide the first compressed neural network for evaluation, wherein the evaluation comprises determining whether the first compressed neural network satisfies a performance requirement; and receive a residual between the first compressed neural network and a second compressed neural network and reconstruct the second compressed neural network based on adding the residual to the first compressed neural network, wherein the first compressed neural network and the second compressed neural network are configured to perform a same task, and wherein a size and performance of the second compressed neural network is higher than a size and performance of the first compressed neural network.

According to a sixth aspect, a method comprises transmitting, by a client device, a request for a neural network to a server device, wherein the request comprises at least one requirement for the neural network; receiving, by the client device, a first compressed neural network; providing, by the client device, the first compressed neural network for evaluation, wherein the evaluation comprises determining whether the first compressed neural network satisfies a performance requirement; and receiving, by the client device, a residual between the first compressed neural network and a second compressed neural network and reconstructing, by the client device, the second compressed neural network based on adding the residual to the first compressed neural network, wherein the first compressed neural network and the second compressed neural network are configured to perform a same task, and wherein a size and performance of the second compressed neural network is higher than a size and performance of the first compressed neural network.

According to a seventh aspect, a computer program is configured, when executed by a client device, to cause the client device to: transmit a request for a neural network to a server device, wherein the request comprises at least one requirement for the neural network; receive a first compressed neural network; provide the first compressed neural network for evaluation, wherein the evaluation comprises determining whether the first compressed neural network satisfies a performance requirement; and receive a residual between the first compressed neural network and a second compressed neural network and reconstruct the second compressed neural network based on adding the residual to the first compressed neural network, wherein the first compressed neural network and the second compressed neural network are configured to perform a same task, and wherein a size and performance of the second compressed neural network is higher than a size and performance of the first compressed neural network.

According to an eighth aspect, a client device comprises means for transmitting a request for a neural network to a server device, wherein the request comprises at least one requirement for the neural network; means for receiving a first compressed neural network; means for providing the first compressed neural network for evaluation, wherein the evaluation comprises determining whether the first compressed neural network satisfies a performance requirement; and means for receiving a residual between the first compressed neural network and a second compressed neural network and reconstructing the second compressed neural network based on adding the residual to the first compressed neural network, wherein the first compressed neural network and the second compressed neural network are configured to perform a same task, and wherein a size and performance of the second compressed neural network is higher than a size and performance of the first compressed neural network.

Many of the attendant features will be more readily appreciated as they become better understood by reference to the following detailed description considered in connection with the accompanying drawings.

### DESCRIPTION OF THE DRAWINGS

The accompanying drawings, which are included to provide a further understanding of the example embodiments and constitute a part of this specification, illustrate example embodiments and together with the description help to explain the example embodiments. In the drawings:
FIG. 1 illustrates an example of a system for delivering compressed neural networks from a server to a client, according to an embodiment.
FIG. 2 illustrates an example of an apparatus configured to transmit and/or receive a compressed neural network, according to an example embodiment;
FIG. 3 illustrates an example of a neural network, according to an embodiment;
FIG. 4 illustrates an example of an elementary computation unit, according to an embodiment;
FIG. 5 illustrates an example of a convolutional neural network, according to an embodiment;
FIG. 6 illustrates an example of delivering neural network(s) from a server to a client, according to an embodiment;
FIG. 7 illustrates an example of a method for delivering neural network(s) from a server to a client layer wise, according to an example embodiment.
FIG. 8 illustrates an example of a method for delivering neural network(s) to a client, according to an example embodiment.
FIG. 9 illustrates an example of a method for receiving neural network(s) from a server, according to an example embodiment.

Like references are used to designate like parts in the accompanying drawings.

### DETAILED DESCRIPTION

Reference will now be made in detail to example embodiments, examples of which are illustrated in the accompanying drawings. The detailed description provided below in connection with the appended drawings is intended as a description of the present examples and is not intended to represent the only forms in which the present example may be constructed or utilized. The description sets forth the functions of the example and the sequence of steps for constructing and operating the example.

According to an example embodiment a client requests a neural network from a server. The request includes requirements for the requested network, for example regarding size and performance of the network. After receiving the request from the client, the server obtains a compressed neural network in accordance with the size indicated in the request. The server may further use its own local dataset to determine whether the performance requirement is satisfied. However, since the server may not have or be able to access the same dataset as the client, the performance of the compressed neural network may not be reliably assessed. Therefore, after receiving the compressed neural network from the server, the client determines whether the compressed neural network satisfies the performance requirement with client's dataset. If not, the client requests an updated compressed network, which is provided as a residual with respect to the first compressed neural network. The process may be iterated until a satisfactory size vs. performance trade-off has been achieved.

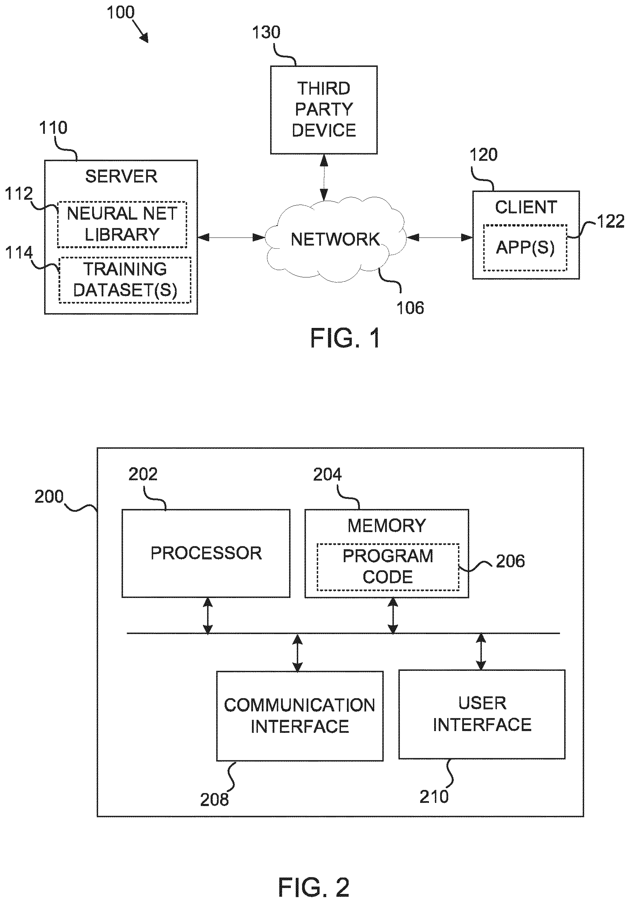

FIG. 1 illustrates an example of a system 100 for delivering compressed neural networks between devices, according to an embodiment. System 100 comprises a server 110, which may be communicatively coupled to a client 120 over a communication network 106. Server 110 comprises a neural network library 112 comprising one or more neural networks configured to perform various tasks. Each neural network of the library 112 may be associated with an identifier such that a corresponding neural network may be retrieved from the library upon request. Server 110 may be further capable of training new neural networks as well as fine-tuning any existing neural network for a particular task, for example based on one or more training datasets 114. Neural network library 112 and/or the training datasets 114 may be located at a memory of server 110, or at a remote memory accessible to server 110.

The server 110 may further be capable of compressing any of the neural networks by various means. Neural network compression may refer to the compression of neural network's parameters, for example weights, which may form the biggest part in terms of bits required to represent the neural network. The other parts, for example, the architecture definition, may not require as many bits to be represented. This may be the case for example for big neural networks comprising a high number of layers and parameters. The input to the neural network compression system may be an original trained network, which may have been trained for example by using at least one task loss. A task loss may refer to a loss function that is minimized during training to achieve a desired output from the network, for example to train the neural network for a particular task.

System 100 may further comprise a third-party device 130, which may be for example configured to perform evaluations of compressed neural networks based on information received from client 120 and to provide evaluation results to client 120 and/or server 110. In some example embodiments, the third-party device 130 may be operated by the same service provider as client 120.

Server 110, client 120, and third-party device 130 may be implemented by various means. For example, server 120 may comprise a server device, server apparatus, server software, server cloud, or the like. Client 120 may comprise a client device, client apparatus, client software, or a client application downloadable to a client device. Third-party device 130 may comprise a third-party apparatus, third-party software, or a third-party service.

Compressing neural networks may be desired for different reasons, such as for example for reducing bitrate required to transmit the network over a communication channel, for reducing storage requirements, for reducing memory consumption at runtime, or for reducing computational complexity at runtime, etc.

Performance of neural network compression may be assessed for example based on the reduction of the number of bits required to represent the neural network and on the degradation of task performance. A compression algorithm is expected to reduce the number of bits, or bitrate, as much as possible, while minimizing degradation of task performance. Task performance may refer to the performance on the task for which the network was trained, such as for example classification accuracy for a classifier or MSE for a network performing regression.

Several approaches may be used to compress neural networks. For example, some approaches may be based on quantization of weights, some approaches may be based on pruning (removing) small values, some approaches may be based on low-rank decompositions of weight matrices, and some approaches may include a training or retraining step. Regarding the latter, the retraining may be performed for each neural network that is subject to compression. This may include retraining the neural network to be compressed with a different loss with respect to the task loss that the network was originally trained with, such as with a combination of at least a task loss and a compression loss. The compression loss may be computed on the weights, for example to enforce pruning or sparsification, for example to enforce many weights to have low values, or to enforce easier quantizability, for example to enforce that weights values to be near quantization values. Such retraining may take a long time, for example up to one week even with most powerful hardware acceleration currently available.

The compression process may comprise a pruning process followed by a quantization process. The neural network subject to compression may be obtained in any way. One example includes retraining or fine-tuning a neural network such that it becomes more compressible. For example, filter pruning may be performed according to a learnt importance of each layer, for example an automatically learnt scale parameter as a part of a batch normalization layer for each filter. Pruning may be performed for example based on thresholding this scale parameter and removing an entire filter that has a scale value under the threshold. The quantization process may be performed for example by a k-means method. It is noted that the pruning of the filters may be more relevant for the amount of memory for storing activations, quantization may be more relevant for the bandwidth limitation. However, if the quantization process ensures weights with fixed-point precision and if the software at client side has a fixed-point implementation of neural networks, quantization to fixed point values may also help to reduce the amount of memory needed to store activations as well as memory needed to store weights of the neural network.

Compression of a neural network provides a neural network that is capable of performing the same task as the original network, but not necessarily with the same quality. The compressed neural network may be provided in a data format that enables reconstruction of the neural network from the compressed representation, for example, by inserting zeros to replace pruned weights. This may be done in accordance with signaling information provided within or along with the compressed representation of the neural network. If the compressed neural network is postprocessed, for example by entropy coding, corresponding inverse operation may be performed before applying the compressed neural network.

A client 120 may be configured with at least one application 122. Application 122 may use at least one neural network received from server 110 over network 106. Capabilities of client 120 may be limited with respect to available memory, computational power, battery power, or in general any resource needed to perform inference with the neural network. Client 120 may be also limited with respect to receiving or storing the neural network. For example, client 120 may have memory limitations such that it may not be able to run the entire neural network in one go. Instead, the client 120 may be configured to run the neural network in subsets, for example layer by layer. Given this constraint, the neural network to be used in inference by client 120 may be beneficially configured to satisfy memory constraints regarding weights of at least one neural network layer and the intermediate activations output from this layer.

In another example, the client 120 may have limited communication capabilities even though communication channel 106 itself would not be bandwidth-limited, for example because of other simultaneous communication sessions running at client 120. In general, the example embodiments enable to satisfy both memory and performance requirements for a client device.

Client 120 may comprise any functions to collect data subject to inference by a neural network. For example, client 120 may be equipped with one or more cameras configured to capture video or image content, one or more microphones configured to capture audio content, or one or more sensors to capture sensor data, for example information associated with acceleration, temperature, or the like. Alternatively, or additionally, client 120 may be configured to receive the data subject to inference from another device, for example from an accessory device such as a smartwatch, from an external camera, microphone or sensor, or an Internet-of-Things (IoT) device.

FIG. 2 illustrates an example of an apparatus 200 according to an embodiment, for example server 110 or client 120. Apparatus 200 comprises at least one processor 202.

The at least one processor may comprise, for example, one or more of various processing devices, such as for example a coprocessor, a microprocessor, a controller, a digital signal processor (DSP), a processing circuitry with or without an accompanying DSP, or various other processing devices including integrated circuits such as, for example, an application specific integrated circuit (ASIC), a field programmable gate array (FPGA), a microcontroller unit (MCU), a hardware accelerator, a special-purpose computer chip, or the like.

The apparatus further comprises at least one memory 204. The memory may be configured to store, for example, computer program code or the like, for example operating system software and application software. The memory may comprise one or more volatile memory devices, one or more non-volatile memory devices, and/or a combination thereof. For example, the memory may be embodied as magnetic storage devices (such as hard disk drives, floppy disks, magnetic tapes, etc.), optical magnetic storage devices, or semiconductor memories (such as mask ROM, PROM (programmable ROM), EPROM (erasable PROM), flash ROM, RAM (random access memory), etc.).

Apparatus 200 may further comprise communication interface 208 configured to enable apparatus 200 to transmit and/or receive information, for example messages to/from other devices. In one example, apparatus 200 may use communication interface 208 to transmit or receive compressed neural networks and/or control messages associated with provision of the compressed neural networks. The communication interface may be configured to provide at least one wireless radio connection, such as for example a 3GPP mobile broadband connection (e.g. 3G, 4G, 5G); a wireless local area network (WLAN) connection such as for example standardized by IEEE 802.11 series or Wi-Fi alliance; a short range wireless network connection such as for example a Bluetooth, NFC (near-field communication), or RFID connection; a local wired connection such as for example a local area network (LAN) connection or a universal serial bus (USB) connection, or the like; or a wired Internet connection.

Apparatus 200 may further comprise a user interface 210 comprising an input device and/or an output device. The input device may take various forms such a keyboard, a touch screen, or one or more embedded control buttons. The output device may for example comprise a display, a speaker, a vibration motor, or the like.

When the apparatus is configured to implement some functionality, some component and/or components of the apparatus, such as for example the at least one processor and/or the memory, may be configured to implement this functionality. Furthermore, when the at least one processor is configured to implement some functionality, this functionality may be implemented using program code 206 comprised, for example, in the memory 204.

The functionality described herein may be performed, at least in part, by one or more computer program product components such as software components. According to an embodiment, the apparatus comprises a processor or processor circuitry, such as for example a microcontroller, configured by the program code when executed to execute the embodiments of the operations and functionality described. Alternatively, or in addition, the functionality described herein can be performed, at least in part, by one or more hardware logic components. For example, and without limitation, illustrative types of hardware logic components that can be used include Field-programmable Gate Arrays (FPGAs), application-specific Integrated Circuits (ASICs), application-specific Standard Products (ASSPs), System-on-a-chip systems (SOCs), Complex Programmable Logic Devices (CPLDs), Graphics Processing Units (GPUs).

The apparatus comprises means for performing at least one method described herein. In one example, the means comprises the at least one processor, the at least one memory including program code configured to, when executed by the at least one processor, cause the apparatus to perform the method.

Apparatus 200 may comprise for example a computing device such as for example a server, mobile phone, a tablet computer, a laptop, an internet of things (IoT) device, or the like. Examples of IoT devices include, but are not limited to, consumer electronics, wearables, sensors, and smart home appliances. In one example, apparatus 200 may comprise a vehicle such as for example a car. Although apparatus 200 is illustrated as a single device it is appreciated that, wherever applicable, functions of apparatus 200 may be distributed to a plurality of devices, for example to implement example embodiments as a cloud computing service.

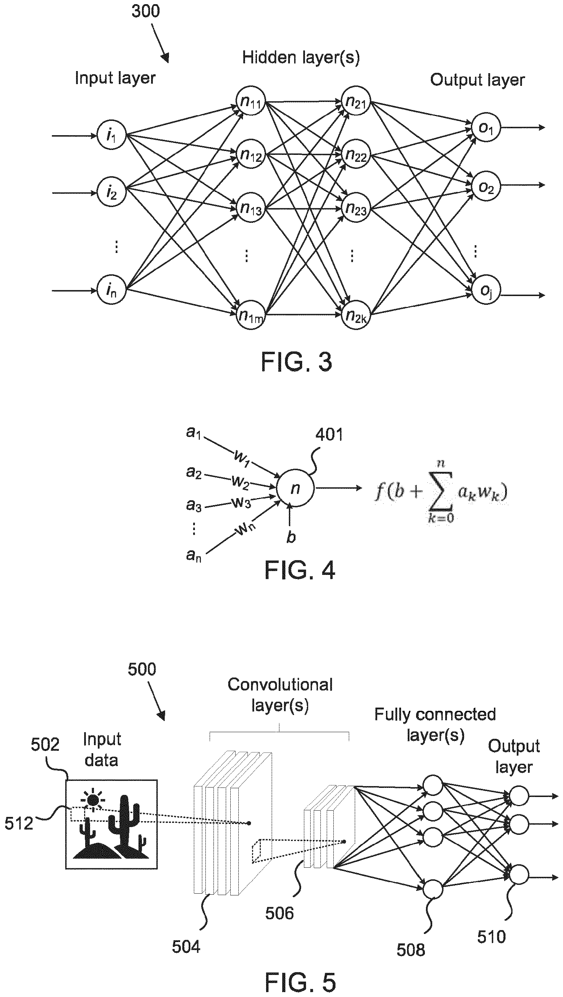

FIG. 3 illustrates an example of a neural network 300, according to an embodiment. Neural network 300 may comprise an input layer, one or more hidden layers, and an output layer. Nodes of the input layer, *i*₁ to *i*ₙ, may be connected to one or more of the m nodes of the first hidden layer, *n*₁₁ to *n*₁ₘ. Nodes of the first hidden layer may be connected to one or more of the k nodes of the second hidden layer, *n*₂₁ to *n*₂ₖ. It is appreciated that even though the example neural network of FIG. 1 illustrates two hidden layers, a neural network may apply any number and any type of hidden layers. Neural network 300 may further comprise an output layer. Nodes of the last hidden layer, in the example of FIG. 3 the nodes of second hidden layer, may be connected to one or more nodes of the output layer, *o*₁ to *o*ⱼ. It is noted that the number of nodes may be different for each layer of the network. A node may be also referred to as a neuron, a unit, a computation unit, or an elementary computation unit. Terms network, neural network, neural net, or model may be used interchangeably. Weights of the neural network may be referred to as learnable parameters or simply as parameters. In the example of FIG. 2, one or more of the layers may be fully connected layers, for example layers where each node is connected to every node of a previous layer. A fully connected layer may be represented for example as a matrix, where the number of rows is the dimensionality of the input activations, and the number of columns is the number of output activations.

Two example architectures of neural networks include feed-forward and recurrent architectures. Feed-forward neural networks are such that there is no feedback loop. Each layer takes input from one or more previous layers and provides its output as the input for one or more of the subsequent layers. Also, units inside certain layers may take input from units in one or more of preceding layers and provide output to one or more of following layers.

Initial layers, for example layers close to the input data, may extract semantically low-level features. In an example of image data, the low-level features may correspond to edges and textures in images. Intermediate and final layers may extract more high-level features. After the feature extraction layers there may be one or more layers performing a certain task, such as classification, semantic segmentation, object detection, denoising, style transfer, super-resolution, or the like.

In recurrent neural networks there is a feedback loop from one or more nodes of one or more subsequent layers. This causes the network to become stateful. For example, the network may be able to memorize information or a state.

FIG. 4 an example of a node 401. A node may be configured to receive one or more inputs, *a*₁ to *a*ₙ, from one or more nodes of one or more previous layers and compute an output based on the input values received. A node may also receive feedback from one or more nodes of one or more subsequent layers. Inputs may be associated with parameters to adjust the influence of a particular input to the output. For example weights *w*₁ to *w*ₙ associated with the inputs *a*₁ to *a*ₙ may be used to multiply the input values *a*₁ to *a*ₙ. The node may be further configured combine the inputs to an output, or an activation. For example, the node may be configured to sum the modified input values. A bias or offset b may be also applied to add a constant to the combination of modified inputs. Weights and biases may be learnable parameters. For example, when the neural network is trained for a particular task, the values of the weights and biases associated with different inputs and different nodes may be updated such that an error associated with performing the task is reduced to an acceptable level.

Furthermore, an activation function f() may be applied to control when and how the node 401 provides its output. Activation function may be for example a non-linear function that is substantially linear in the region of zero but limits the output of the node when the input increases or decreases. Examples of activation functions include, but are not limited to, a step function, a sigmoid function, a tanh function, a ReLu (rectified linear unit) function. The output may be provided to nodes of one or more following layers of the network, and/or to one or more nodes of one or more previous layers of the network.

A forward propagation or a forward pass may refer to feeding a set of input data through the layers of the neural network 300 and producing an output. During this process the weights and biases of the neural network 300 affect the activations of individual nodes and finally the output provided by the output layer.

One property of neural networks and other machine learning tools is that they are able to learn properties from input data, for example in supervised way or in unsupervised way. Learning may be based on teaching the network by a training algorithm or based on a meta-level neural network providing a training signal.

In general, a training algorithm may include changing some properties of the neural network such that its output becomes as close as possible to a desired output. For example, in the case of classification of objects in images, the output of the neural network may be used to derive a class or category index, which indicates the class or category that the object in the input image belongs to. Training may happen by minimizing or decreasing the output's error, also referred to as the loss.

During training the generated or predicted output may be compared to a desired output, for example ground-truth data provided for training purposes, to compute an error value. The error may be calculated based on a loss function. Updating the neural network may be then based on calculating a derivative with respect to learnable parameters of the network. This may be done for example using a backpropagation algorithm that determines gradients for each layer starting from the final layer of the network until gradients for the learnable parameters have been obtained. Parameters of each layer are updated accordingly such that the loss is iteratively decreased. Examples of losses include mean squared error, cross-entropy, or the like. In deep learning, training comprises an iterative process, where at each iteration the algorithm modifies parameters of the neural network to make a gradual improvement of the network's output, that is, to gradually decrease the loss.

Training phase of the neural network may be ended after reaching an acceptable error level. Inference phase may refer to applying the trained neural network for a particular task. For example, to provide a classification of an unseen image to one of a plurality of classes based on content of an input image.

Training a neural network may be seen as an optimization process, but the final goal may be different from a typical goal of optimization. In optimization, the goal may be to minimize a functional. In machine learning, a goal of the optimization or training process is to make the model learn the properties of the data distribution from a limited training dataset. In other words, the goal is to learn to use a limited training dataset in order to learn to generalize to previously unseen data, that is, data which was not used for training the model. This may be referred to as generalization.

In some examples, data may be split into at least two sets, a training data set and a validation data set. The training data set may be used for training the network, for example to modify its learnable parameters in order to minimize the loss. The validation data set may be used for checking performance of the network on data which was not used to minimize the loss as an indication of the final performance of the model. In particular, the errors on the training set and on the validation data set may monitored during the training process to understand the following issues: 1) if the network is learning at all - in this case, the training data set error should decrease, otherwise the model is in the regime of underfitting; 2) if the network is learning to generalize - in this case, also the validation set error should decrease and not be much higher than the training data set error. If the training data set error is low, but the validation data set error is much higher than the training data set error, or it does not decrease, or it even increases, the model is in the regime of overfitting. This means that the model has just memorized properties of the training data set and performs well on that set, but performs poorly on a set not used for tuning its parameters.

FIG. 5 illustrates an example of a convolutional neural network 500. A convolutional neural network 500 may comprise at least one convolutional layer. A convolutional layer may perform convolution type of operations to extract information from input data, for example image 502, to form a plurality of feature maps 504. A feature map may be generated for example based on applying a filter or a kernel to a subset of input data, for example block 512 in image 502, and sliding the filter through the input data to obtain a value for each element of the feature map. The filter may comprise a matrix or a tensor, which may be for example multiplied with the input data to extract features corresponding to that filter. A plurality of feature maps may be generated based on applying a plurality of filters. A further convolutional layer may take as input the feature maps from a previous layer and apply similar filtering process on the feature maps 504 to generate another set of feature maps 506. Weights of the filters may be learnable parameters and they may be updated during a training phase, similar to parameters of neural network 300. Similar to node 401, an activation function may be applied to the output of the filter(s). The convolutional neural network may further comprise one or more other type of layers such as for example fully connected layers 508 after and/or between the convolutional layers. An output may be provided by an output layer 510.

As an example of compressing neural networks, a convolutional layer with 256 filters may output *H* × *W* × 256 feature maps, where H and W are the height and width of the feature map output by each filter. Such convolutional layer may be compressed, for example by pruning methods, to a convolutional layer with 100 filters, which would output *H* × *W* × 100 feature maps, thus requiring much less memory space.

An architecture of a neural network may refer to the type, size, and relationships of the neural network layers. An example of a neural network having a particular architecture is ResNet50. This network may be trained for many different tasks. During training the learnable parameters, such as for example weights, filter values, biases, or the like, may be updated. However, during training the architecture of the network may be preserved. Neural network architectures may be enumerated. For example, server 110 and client 120 may exchange information, for example a look-up table, to assign identifiers for different architectures.

Example embodiments may be applied in at least two scenarios. In a first scenario the memory available on client 120 may be very limited. For example, only one layer and either the input activations or output activations or both can be stored. The client 120 may be alternatively able to store a subset of the layers, for example two or three layers, and corresponding input, output and intermediate activations. In a second scenario the memory on client 120 may be limited such that the whole network can be stored, but only either the input activations or output activations or both from a single layer can be stored.

In both scenarios, the memory for storing the input activations, the output activations, or both may not be enough for storing the activations from an original, uncompressed, layer. Therefore the original layers may be made smaller (compressed) such that the output activations occupy less memory.

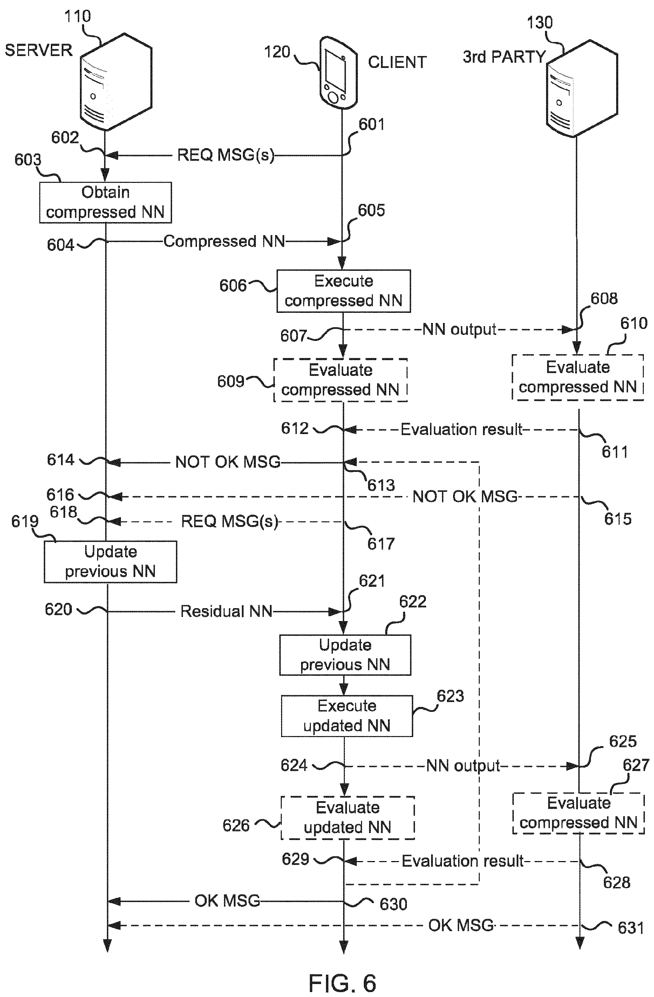

FIG. 6 illustrates an example of delivering neural network(s) from a server 110 to a client 120, with an optional performance evaluation step at a third-party device 130, according to an embodiment. Client 120 may initially determine that it needs to perform a task. This may be for example during an execution of an application 122 at the client 120, upon obtaining data subject to inference by a neural network, or upon a request from a user.

At 601, client 120 determines to transmit a request for a neural network. The request may for example comprise a request message (REG MSG) or a request signal. The request may comprise one or more request messages or signals and the information included in the request may be distributed among the one or more request messages or signals.

According to an example embodiment, the request may comprise a size associated with the requested neural network. The size may for example comprise a memory limit for the neural network. The size may be determined by the client 120 based on memory available at the client 120. The available memory may refer to a total amount of memory available at the client 120 or an amount of memory allocated for executing the neural network, for example an amount of memory allocated to an application 122. Size of the neural network may be provided in various formats, for example as number of bits or bytes, number of nodes, number and/or precision of activations, or the like.

According to an example embodiment, the request may comprise a size associated with a subset of the neural network, for example at least one layer of the neural network. The size may comprise for example a size, for example a maximum size, of the layer of neural network. Alternatively, or additionally, the size may comprise a size, for example a maximum size, of activations output from the layer.

According to an example embodiment, the request may comprise an identifier of a task to be performed by the neural network. For example, a particular identifier, for example an integer value, may be associated with a particular task, such as for example image classification. Alternatively, name of the task may be included in the request as a string of characters.

According to an example embodiment the request may comprise an identifier of an architecture of the neural network. The architecture may be provided for example as a number of layers, type of layers, numbers of nodes at the layers, parameters of filters, or the like. Alternatively, an architecture may be identified based on a reference to a predefined architecture, such as for example ResNet50. The reference may be provided as an identifier, for example an integer number, or as a string of characters.

According to an example embodiment the request may comprise at least one performance requirement for the neural network. The performance requirement may be associated with the task indicated by the identifier of the task included in the request. The performance requirement may be provided in any suitable format. For example, for image classification the performance requirement may comprise an accuracy in the image classification task. This may be provided for example as a percentage of correct classifications, such as for example 94 out of 100. In another example, for an image compression task, the performance requirement may be expressed as mean-square-error (MSE) between the output image and a ground-truth image.

At 602, server 110 receives the request for the neural network from the client 120. At 603, the server 110 obtains a first compressed neural network. Obtaining the first compressed network is based on the at least one requirement included in the request. According to an example embodiment, obtaining the first compressed neural network may comprise retrieving a compressed neural network that complies with the request from a memory of server 110, or requesting such network form an external device.

According to an example embodiment, the first compressed neural network may be obtained by compressing a neural network retrieved from memory of server 110 or requested form an external device. Target of the compression may be to obtain a smallest reasonable network (SRN), which satisfies the performance requirement on an annotated dataset possessed by or accessible to the server 110.

The neural network subject to compression may be referred to as an original neural network, although it is appreciated that the original neural network may have been subject to one or more previous compression steps or other processing steps. According to an example embodiment, the server 110 may select the original network based on the identifier of the neural network or the identifier of the architecture of the neural network. For example, if the request indicates ResNet50, server 110 may retrieve ResNet50 from its neural network library 112. According to an example embodiment, the server 110 may select the original neural network based on the identifier of the task. For example, the server 110 may be configured with a mapping between a plurality of tasks and a plurality of networks. For example, if the request indicates that the task is image classification, the server 110 may be configured to select ResNet50 as the original neural network.

According to an example embodiment, the request sent by client 120 may include identifier of a task and an identifier of a neural network architecture. For example, the request may comprise a TaskID indicating ImageNetClassification and an ArchitectureID indicating ResNet50. In another example, the request may comprise a TaskID indicating CIFAR100Classification and an ArchitectureID indicating ResNet50. The request may further comprise additional identifiers, for example for indicating training hyperparameters. For example, the request may comprise a TaskID indicating CIFAR100Classification, an ArchitectureID indicating ResNet50 as well as a TrainingID, for example UsingBatchNormLayers.

Server 110 may determine parameters for compressing the original neural network based on the size and/or the performance requirement indicated in the request. In some embodiments, the performance, for example accuracy, may not be considered by the server 110. Instead, the memory or bandwidth requirement may be considered without considering the performance. Memory and/or bandwidth limitations may be considered with respect to a subset of the compressed neural network, for example with respect to any layer of the compressed neural network. In some embodiments, the performance requirement on the data available locally at the server side may be predefined, for example a default performance requirement, whereas in other embodiments the performance requirement may be received from the client 120, or from another device such as for example third-party device 130. Alternatively, or additionally, a bandwidth requirement associated with a communication channel of network 106 may be considered when determining the compression parameters.

Based on the at least one requirement, server 110 may compress the original network to obtain a suitable compressed neural network. For example, server 110 may select a pruning threshold and number of clusters, k, in a k-means based compression method such that when pruned and quantized the compressed network will satisfy the size or bandwidth, and/or performance requirement(s). For example, a default performance requirement or received performance requirement may be 90 percent of the performance of the original model. The compressed network may be for example represented by using a binary tensor indicating positions of zeros (pruned weights), another tensor containing the non-pruned and quantized weights in the form of cluster labels, and a mapping between cluster labels and centroid values, for example a dictionary or a look-up table. However, any other suitable representation of a compressed neural network may be used.

Operation 603 may further comprise determining whether the compressed neural network satisfies the at least one requirement included in the request received from the client 120. For example, server 110 may compare size of the compressed network to the size indicated in the request, and determine to send the compressed neural network to client 120 if the size is less than or equal to the size indicated in the request. According to an example embodiment, server 110 may determine whether the compressed neural network satisfies the at least one performance requirement included in the request. This may be based on performing inference on a server dataset, for example a local dataset available to server 110.

It is noted that even if performance, when evaluated with the local dataset of the server 110, satisfies the performance requirement, this does not necessarily imply satisfying the performance requirement at the client 120, when inference is performed at the client 120 with a different dataset.

At 604, server 110 transmits the compressed neural network to client 120. Transmitting the compressed neural network may be in response to determining that the compressed neural network satisfies, at least substantially, the at least one performance requirement, size, and/or other requirements.

At 605, the client 120 receives the compressed neural network from server 110. The client 120 may then reconstruct the compressed neural network based on the received representation. For example, the client 120 may insert zeros or other predetermined values to certain locations, for example based on an indication included in signaling information received within or along the representation of the compressed neural network. The indicated locations may correspond to pruned weights. Non-pruned weights may be replaced for example by cluster centroids depending on the label vector that is sent for each weight.

At 606, the client 120 may execute, run, or infer the compressed neural network. This may comprise providing input data to the neural network and obtaining output data from the compressed neural network.

At 607, the client 120 may transmit the output of the compressed neural network a third-party device 130. Transmitting the output may further comprise transmitting instructions to evaluate performance of the compressed neural network based on the output data provided by client 120.

At 608, the third-party device may receive the output data from client 120. The third-party device 130 may possess annotations or labels possessed by client 120. Based on the annotation or labels and the output data, the third-party device 130 may evaluate performance of the compressed neural network at 610. At 611, the third-party device 130 may transmit the evaluation result to client 120.

As part of the evaluation at 610, the third-party device 130 may determine whether the compressed neural network satisfies the performance requirement and/or other requirements. In response to determining that the compressed neural network satisfies the requirement(s), the third-party device 130 may proceed to operation 631 to acknowledge delivery of an acceptable neural network to client 120, for example by sending an "OK" message to server 110. The acknowledgement message may comprise an identifier of client 120 and/or an identifier of the compressed neural network.

In response to determining that the compressed neural network does not satisfy the requirement(s), the third-party device 130 may transmit an indication that the compressed neural network does not satisfy the requirement(s) to the server 110, for example a "NOT OK" message at operation 615. The indication may comprise an identifier of client 120 and/or an identifier of the compressed neural network. Transmitting the "OK" or "NOT OK" messages directly to server 110 may reduce delay in providing feedback to server 110 regarding the compression of the neural network. Alternatively, or additionally, at 611 the third-party device 130 may send the evaluation result to client 120.

At 609, the client 120 may evaluate the compressed neural network to determine whether it satisfies the performance requirement and/or other requirements. Evaluating the performance may be done based on a client dataset, which may comprise a local dataset available to client 120. As discussed above, the client dataset may be different from the server dataset. The server dataset and client datasets may be annotated datasets.

In response to determining that the compressed neural network satisfies the requirement(s), the client 120 may directly proceed to operation 630 to acknowledge reception of an acceptable neural network, for example by sending an "OK" message to server 110.

In response to determining that the compressed neural network does not satisfy the requirement(s), the client 120 transmits an indication that the compressed neural network does not satisfy at least one performance requirement, for example a "NOT OK" message at operation 613. Determining whether the compressed neural network satisfies the requirement(s) may be based on the evaluation at 609 or the evaluation result received from the third-party device 130 at 612.

Alternatively, or additionally, at 617 client 120 may send a second request, for example a second request message or a second request signal, to server 110. The second request may comprise an indication of a required performance improvement. The indication of the required performance improvement may be provided with respect to the compressed neural network received from server 110 at 605. The indication of the required performance improvement may comprise at least one of: a performance of the first compressed neural network, when evaluated based on a client dataset; or a difference between the performance requirement and the performance of the first compressed neural network, when evaluated by the client 120 on the client dataset. For example, the client 120 may indicate that the performance with the client dataset is 91/100, which is lower than the required performance 94/100. Alternatively, the client 120 may indicate that the performance with the client dataset is 3/100 lower than the required performance. Although not illustrated in FIG. 6, this indication may be also sent by third-party device 130.

At 614 or 616, the server 110 receives the indication that the compressed neural network does not satisfy at least one performance requirement, either from the client 120 or the third-party device 130. Alternatively, or additionally, at 618 the server 110 may receive the second request from client 120, or third-party device 130. Based on the indication received at 614 or 616 and/or the second request at 618, the server 110 determines to obtain an updated neural network, for example a second compressed neural network, in order to satisfy the at least one performance requirement also with the client dataset. If server 110 does not receive the second request, it may use a default performance improvement when obtaining the updated compressed neural network.

At 619, the server 110 updates the compressed neural network. Starting from a previous neural network (PNN) that was sent to the client 120, for example the first compressed neural network, the server 110 obtains a residual, for example a residual weight vector, to be added to the PNN. The resulting network should still satisfy the bandwidth and/or size requirement. In general, a PNN may refer to a network that is obtainable from an initial network, for example the smallest reasonable network (SRN), by adding all previous residuals sent to the client 120. The neural network obtained based on adding the residual to the PNN, for example the second compressed neural network, should increase performance on the server dataset.

Depending on the method that the server uses and depending on the availability of the information, the server 110 may use the PNN's performance and the received requirement of performance improvement to update the network. For example, server 110 may determine a second pruning threshold (thr) and/or second quantization hyperparameter(s), for example a number of clusters (k) to improve performance of the first compressed neural network. Determining the second pruning threshold and/or the second quantization hyperparameter(s) may be based on the required performance improvement included in the second request. A weight update may be obtained based on the pruning and the quantization process that is applied in this stage compared to the previous stage. For example, if in the previous stage thr=0.001 and k=32 were applied and during this stage thr=0.0005 and k=32 were applied there may be two options: A) the new weights that are not pruned in this stage but were pruned in the previous stage can be sent to the device with the labels for these weights calculated according to the previous cluster centroids. B) the server 110 may decide to recalculate the quantization cluster centroids and labels for every non-pruned weight may be recalculated and sent.

At 620, the server 110 transmits a residual between the first compressed neural network and the second compressed neural network to the client 120. According to an example embodiment, the residual may comprise non-pruned weights which were not transmitted to the client 120 as part of the first compressed neural network. According to an example embodiment, the residual may comprise a difference between non-pruned weights of the first compressed neural network and the non-pruned weights of the second compressed neural network. The latter may be applied for example if different quantization cluster centroids are used when generating the second compressed neural network.

The size of the second compressed neural network is higher than the size of the first compressed neural network. Furthermore, performance of the second compressed neural network is higher than performance of the first compressed neural network, when evaluated either based on the server dataset or the client dataset.

At 621, the client 120 receives the residual between the first compressed neural network and the second compressed neural network.

At 622, the client 120 may update the previous neural network. The client 120 reconstructs a second compressed neural network based on the previously received first compressed neural network and the residual. This may be done for example based on reconstructing the received residual, for example based on adding predetermined values at signaled locations, and adding the reconstructed residual to the first compressed neural network.

At 623, the client 120 may execute, run, or infer the updated neural network, for example the second compressed neural network, similar to operation 606.

At 624, the client 120 may transmit the output of the updated neural network, for example the second compressed neural network to a third-party device 130, similar to operation 607.

At 625, the third-party device 310 may receive the output of the updated neural network. At 627, the updated neural network may be evaluated similar to operation 610. An evaluation result may be provided to client at 628, similar to operation 611, and an acknowledgement of delivery of an acceptable neural network to client 120 may be provided at 631, for example by sending an "OK" message.

At 626, the client 120 may evaluate performance of the updated neural network, for example the second compressed neural network, on the client dataset, similar to operation 609.

In response to determining that the updated neural network still does not satisfy the requirement(s), the client 120 may proceed to operation 613 and/or operation 617 to provide an indication of the updated neural network not satisfying the performance requirement and/or the required performance improvement. Alternatively, client 120 may proceed to operation 613 and/or operation 617, in response to receiving the evaluation result from the third-party device 130 at 729, for example if the evaluation result indicates that the updated neural network still does not satisfy the requirement(s).

In response to determining that the updated neural network satisfies the requirement (s), at 630 the client 120 may acknowledge reception of an acceptable neural network, for example by transmitting an "OK" message to server 110. This may be based on the evaluation at 626 or the evaluation result received from the third-party device 130 at 629. According to an example embodiment, sending an "OK" message may be optional. In this case the client 120 may start using the updated compressed neural network without acknowledging it to server 110. If not receiving a further request from the client 120, the server 110 may determine that the updated compressed neural network was satisfactory.

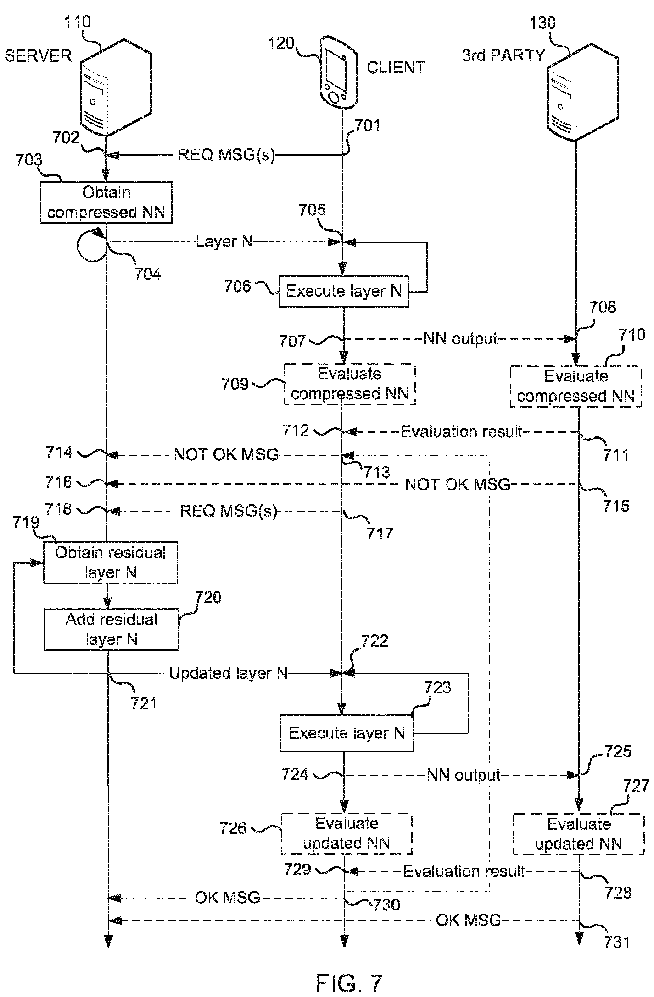

FIG. 7 illustrates an example of layer wise delivery of neural network(s) from a server 110 to a client 120, with an optional performance evaluation step performed at a third-party device 130, according to an embodiment. It is noted that even though the embodiments of FIG. 7 are described using layers as an example of a subset, the embodiments may be applied to any other subsets of neural networks. For example, convolutional layers of the neural network could be delivered filter-by-filter. Transmitting or updating at least a subset may refer to transmitting or updating a subset of the neural network or the whole neural network, for example all layers of the neural network

The example embodiment of FIG. 7 may comprise operations 701 to 703, similar to operations 601 to 603, respectively. In operation 703 the server may select compression parameters such that the memory and/or bandwidth limitations are not exceeded for any single layer of the resulting compressed neural network.

At 704, server 110 may transmit a first layer of the first compressed neural network to client 120.

At 705, the client 120 may receive the first layer of the compressed neural network from the server 110.

At 706, the client 120 may execute, run, or infer the first layer of the compressed neural network. Execution of the first layer may comprise providing input data to the first layer and storing intermediate activations output by the first layer. Operation 706 may further comprise transmitting an acknowledgement message to server 110. This may be done to indicate that the first layer was successfully executed and that the client 120 is ready to receive the next layer for execution.

The server 110 may be configured to iterate transmitting the layers at 704 until all layers of the network have been delivered to client 120. A next layer may be transmitted in response to receiving the acknowledgement message from the client 120. Alternatively, the server 110 may be configured to transmit the layers periodically, for example after a predetermined waiting time has elapsed from transmitting a previous layer.

The client 120 may iterate receiving 705 and executing 706 the layers until all layers have been executed. Receiving a next layer may comprise overwriting at least part of a previous layer in the memory of the client 120. Execution of a next layer may be based on the intermediate activations output by the previous layer and stored in the memory of the client 120. Output of the next layer may be stored as intermediate activations, for example by overwriting at least part of the previous intermediate activations.

At 707, the output from the final layer may be provided for evaluation at a third-party device 130, similar to operation 607.

The example embodiment of FIG. 7 may further comprise operations 708 to 718, similar to operations 608 to 618, respectively.

At 719, server 110 may obtain a residual between a first layer of the previous neural network, and a first layer of an updated neural network. The residual may be referred to as a residual layer. The previous neural network may comprise a first compressed neural network and the updated neural network may comprise a second compressed neural network.

Obtaining the residual layer may comprise fine-tuning a previous neural network with a compression loss and computing a weight-wise difference between the new and the previous neural network layers. Alternatively, obtaining the residual may comprise fine-tuning the previous neural network with the compression loss and keeping track of (e.g. by accumulating) the weight updates computed at each iteration. The final weight update may be obtained as the sum of weight updates. The final weight update may comprise an array or tensor of values, which may be sliced (partitioned) to get values corresponding to each layer. In yet another example, the compression step may be re-run with a less severe compression rate target. The obtained weights may be compared to the weights of layers of the previous neural network to obtain the residual as difference between the weights.

At 720, the server may add the residual layer to the first layer of the previous neural network, for example the first compressed neural network. Adding the residual may be advantageously done at the server 110 in order to enable client 120 to release memory resources after execution of each layer at 706.

At 721, the server 110 may transmit the updated first layer of the updated neural network to client 120. The server 110 may iterate obtaining the residual layers 719, adding the residual layers 720 to layers of the previous neural network, and transmitting 721 the updated layers to the client 120. It is however noted that the server 110 may also obtain residuals for a plurality layers, update the layers, and after that transmit the updated layers to client 120 layer by layer, similar to operation 704.

At 722, the client 120 may receive the first residual layer from the server 110.

At 723, the client 120 may execute, run, or infer the first layer of the updated neural network, for example the second compressed neural network, similar to operation 706.

The server 110 may be configured to iterate transmitting the update layers at 721 until all residual layers of the updated neural network have been delivered to client 120, similar to operation 704.

The client 120 may iterate receiving the updated layers 722 and executing the updated layers 723 until all layers of the updated neural network have been executed, similar to operation 706.

At 724, the client 120 may transmit the output of the final layer of the updated neural network, for example the second compressed neural network, to the third-party device 130, similar to operation 707.

The example embodiment of FIG. 7 may further comprise operations 725 to 731, similar to operations 625 to 631, respectively.

The example embodiments of FIG. 6 or FIG. 7 may be generalized to a dynamic use case, where available bandwidth and/or memory changes over time. The server 110 and/or client 120 may be therefore configured monitor bandwidth and/or memory limitations over time. According to an example embodiment, the procedure of delivering an updated compressed neural network may be triggered based on a change in available bandwidth and/or memory. For example, in response to reallocation of memory at client 120, for example as a result of launching another application 122, the client 120 may transmit a request message to obtain a more compressed neural network from server 110.

Other requirements that may be considered when providing compressed neural networks include computational complexity, which may determine speed of inference. For example, client 120 may require a neural network that is able to perform an inference step on its hardware within a period, for example within 100 ms. Therefore, a request for a neural network may comprise a required time period for performing inference with the neural network. The time period may be expressed for example with respect to a reference hardware, for which an execution speed is known. According to an example embodiment, the request may indicate a computational complexity, for example a maximum complexity that is not to be exceeded. The computational complexity may be expressed for example as number of operations, for example multiplication or additions, needed to perform inference.

Example embodiments improve delivery of compressed neural networks between devices. Example embodiments are beneficial for example when the devices do not share the same dataset for evaluating performance of the compressed neural network or when the client device is not able to perform the evaluation. Delivering a residual of the updated neural network with respect to a previous neural network reduces required transmission resources. Layer wise delivery of the compressed layers enables the compressed neural networks to be executed with lower memory requirements. Applying the residual may be useful when optimizing the size of the compressed neural network iteratively. Example embodiments further enable dynamically adapting resources needed for performing inference on a neural network.

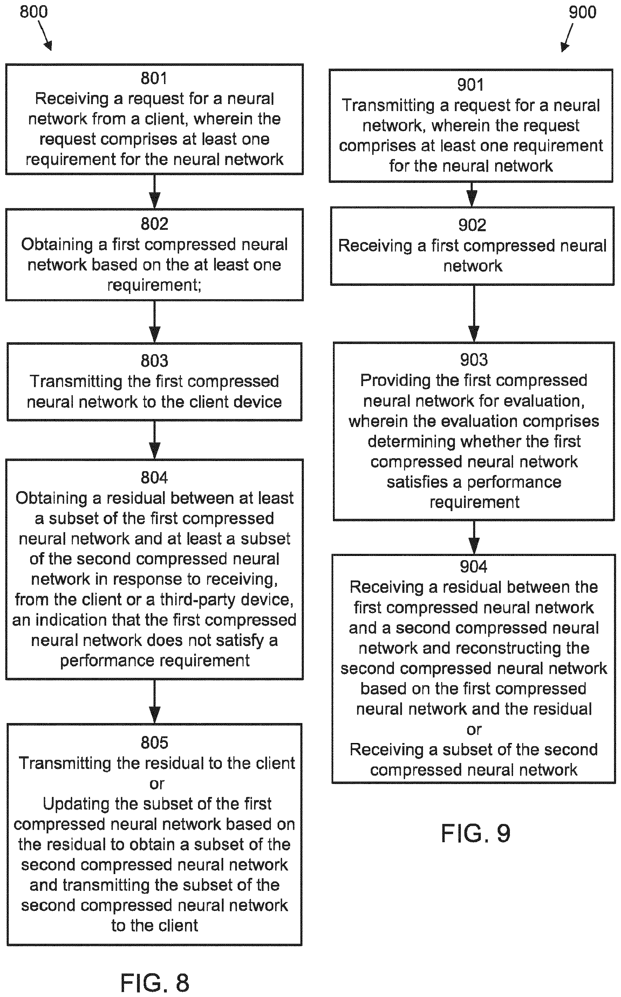

FIG. 8 illustrates an example of a method 800 for transmitting neural network(s) to a client, according to an example embodiment.

At 801, the method comprises receiving a request for a neural network from a client, wherein the request comprises at least one requirement for the neural network.

At 802, the method comprises obtaining a first compressed neural network based on the at least one requirement.

At 803, the method comprises transmitting the first compressed neural network to the client device.

At 804, the method comprises obtaining a residual between at least a subset of the first compressed neural network and at least a subset of the second compressed neural network in response to receiving, from the client or a third-party device, an indication that the first compressed neural network does not satisfy a performance requirement.

At 805, the method comprises transmitting the residual to the client; or updating the subset of the first compressed neural network based on the residual to obtain a subset of the second compressed neural network and transmitting the subset of the second compressed neural network to the client.

FIG. 9 illustrates an example of a method 900 for requesting and receiving neural network(s) form a server, according to an example embodiment.

At 901, the method comprises transmitting a request for a neural network, wherein the request comprises at least one requirement for the neural network.

At 902, the method comprises receiving a first compressed neural network.

At 903, the method comprises providing the first compressed neural network for evaluation, wherein the evaluation comprises determining whether the first compressed neural network satisfies a performance requirement.

At 904, the method comprises receiving a residual between the first compressed neural network and a second compressed neural network and reconstructing the second compressed neural network based on the first compressed neural network and the residual; or receiving a subset of the second compressed neural network.

Further features of the methods directly result from the functionalities and parameters of the server 110 and/or client 120 as described in the appended claims and throughout the specification and are therefore not repeated here.

An apparatus, for example server 110 or client 120 may be configured to perform or cause performance of any aspect of the method(s) described herein. Further, a computer program may comprise instructions for causing, when executed, an apparatus to perform any aspect of the method(s) described herein. Further, an apparatus may comprise means for performing any aspect of the method(s) described herein. According to an example embodiment, the means comprises at least one processor, and memory including program code, the at least one processor, and program code configured to, when executed by the at least one processor, cause performance of any aspect of the method(s).

Any range or device value given herein may be extended or altered without losing the effect sought. Also, any embodiment may be combined with another embodiment unless explicitly disallowed.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items.

The steps or operations of the methods described herein may be carried out in any suitable order, or simultaneously where appropriate. Additionally, individual blocks may be deleted from any of the methods without departing from the scope of the subject matter described herein. Aspects of any of the embodiments described above may be combined with aspects of any of the other embodiments described to form further embodiments without losing the effect sought.

The term 'comprising' is used herein to mean including the method, blocks, or elements identified, but that such blocks or elements do not comprise an exclusive list and a method or apparatus may contain additional blocks or elements.

Although subjects may be referred to as 'first' or 'second' subjects, this does not necessarily indicate any order or importance of the subjects. Instead, such attributes may be used solely for the purpose of making a difference between subjects.

As used in this application, the term 'circuitry' may refer to one or more or all of the following: (a) hardware-only circuit implementations (such as implementations in only analog and/or digital circuitry) and (b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and or processor (s), such as a microprocessor (s) or a portion of a microprocessor(s), that requires software (e.g., firmware) for operation, but the software may not be present when it is not needed for operation. This definition of circuitry applies to all uses of this term in this application, including in any claims.

As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from scope of this specification.

## Claims

1. A server device, comprising:
at least one processor; and
at least one memory including computer program code;
the at least one memory and the computer program code configured to, with the at least one processor, cause the server device at least to:
receive a request for a neural network from a client device, wherein the request comprises at least one requirement for the neural network;
obtain a first compressed neural network based on the at least one requirement;
transmit the first compressed neural network to the client device;
obtain a residual between at least a subset of the first compressed neural network and at least a subset of a second compressed neural network in response to receiving, from the client device or a third-party device, an indication that the first compressed neural network does not satisfy a performance requirement, wherein the first compressed neural network and the second compressed neural network are configured to perform a same task, wherein the second compressed neural network is obtainable based on adding the residual to the first compressed neural network, and wherein a size and performance of the second compressed neural network are higher than a size and performance of the first compressed neural network; and
transmit the residual to the client device.

2. The server device according to claim 1, wherein the at least one memory and the computer program code are further configured to, with the at least one processor, cause the server device at least to:
transmit the first compressed network in a first plurality of messages, wherein a first message of the first plurality of messages comprises the subset of the first compressed neural network, and/or
transmit the second compressed neural network in a second plurality of messages, wherein a second message of the second a plurality of messages comprises the subset of the second compressed neural network.

3. The server device according to claim 2, wherein the subset of the first compressed neural network comprises at least one layer of the first compressed neural network, and wherein the subset of the second compressed neural network comprises at least one layer of the second compressed neural network.

4. The server device according to any preceding claim, wherein the at least one requirement comprises at least one of:
a size associated with the neural network;
a size associated with at least one layer of the neural network;
a size associated with activations of the at least one layer of the neural network;
an identifier of the task to be performed by the neural network;
an identifier of an architecture of the neural network;
an identifier of the neural network; or
the performance requirement for the neural network.

5. The server device according to any preceding claim, wherein the at least one memory and the computer program code are further configured to, with the at least one processor, cause the server device at least to:
receive, from the client device, a second request comprising an indication of a required performance improvement comprising at least one of:
a performance of the first compressed neural network, when evaluated based on a client dataset; or
a difference between the performance requirement and the performance of the first compressed neural network, when evaluated by the client device on the client dataset; and
obtain the residual based on the indication of the required performance improvement.

6. A client device comprising:
at least one processor; and
at least one memory including computer program code;
the at least one memory and the computer program code configured to, with the at least one processor, cause the client device at least to:
transmit a request for a neural network to a server device, wherein the request comprises at least one requirement for the neural network;
receive a first compressed neural network;
provide the first compressed neural network for evaluation, wherein the evaluation comprises determining whether the first compressed neural network satisfies a performance requirement; and
receive a residual between the first compressed neural network and a second compressed neural network and reconstruct the second compressed neural network based on adding the residual to the first compressed neural network, wherein the first compressed neural network and the second compressed neural network are configured to perform a same task, and wherein a size and performance of the second compressed neural network is higher than a size and performance of the first compressed neural network.

7. The client device according to claim 6, wherein the at least one memory and the computer program code are further configured to, with the at least one processor, cause the client device at least to transmit the first compressed neural network for evaluation to a third-party device.

8. The client device according to claim 6, wherein the at least one memory and the computer program code are further configured to, with the at least one processor, cause the client device at least to:
evaluate the first compressed neural network based on a local dataset, and
transmit an indication that the first compressed neural network does not satisfy the performance requirement.

9. The client device according to any of claims 6 to 8, wherein the at least one memory and the computer program code are further configured to, with the at least one processor, cause the client device at least to:
receive the first compressed network in a first plurality of messages, wherein a first message of the first plurality of messages comprises a subset of the first compressed neural network, and/or
receive the second compressed neural network in a second plurality of messages, wherein a second message of the second plurality of messages comprises the subset of the second compressed neural network.

10. The client device according to claim 9, wherein the at least one memory and the computer program code are further configured to, with the at least one processor, cause the client device at least to:
execute the subset of the first compressed neural network in response to receiving the first message; and/or
execute the subset of the second compressed neural network, in response to receiving the second message.

11. The client device according to claim 9 or claim 10, wherein the subset of the first compressed neural network comprises at least one layer of the first compressed neural network, and wherein the subset of the second compressed neural network comprises at least one layer of the second compressed neural network.

12. The client device according to any of claims 6 to 11, wherein the at least one requirement for the neural network comprises at least one of:
a size associated with the neural network;
a size associated with at least one layer of the neural network;
a size associated with activations of the at least one of the neural network;
an identifier of the task to be performed by the neural network;
an identifier of an architecture of the neural network;
an identifier of the neural network; or
the performance requirement.

13. A method, comprising:
receiving, by a server device, a request for a neural network from a client device, wherein the request comprises at least one requirement for the neural network;
obtaining, by the server device, a first compressed neural network based on the at least one requirement;
transmitting, by the server device, the first compressed neural network to the client device;
obtaining, by the server device, a residual between at least a subset of the first compressed neural network and at least a subset of a second compressed neural network in response to receiving, from the client device or a third-party device, an indication that the first compressed neural network does not satisfy a performance requirement, wherein the first compressed neural network and the second compressed neural network are configured to perform a same task, wherein the second compressed neural network is obtainable based on adding the residual to the first compressed neural network, and wherein a size and performance of the second compressed neural network is higher than a size and performance of the first compressed neural network; and
transmitting, by the server device, the residual to the client device.

14. A method, comprising:
transmitting, by a client device, a request for a neural network, wherein the request comprises at least one requirement for the neural network;
receiving, by the client device, a first compressed neural network;
providing, by the client device, the first compressed neural network for evaluation, wherein the evaluation comprises determining whether the first compressed neural network satisfies a performance requirement; and
receiving, by the client device, a residual between the first compressed neural network and a second compressed neural network and reconstructing, by the client device, the second compressed neural network based on adding the residual to the first compressed neural network, wherein the first compressed neural network and the second compressed neural network are configured to perform a same task, and wherein a size and performance of the second compressed neural network is higher than a size and performance of the first compressed neural network.

15. A computer program comprising program code which, when the program is executed by a server device, causes the server device at least to:
receive a request for a neural network from a client device, wherein the request comprises at least one requirement for the neural network;
obtain a first compressed neural network based on the at least one requirement;
transmit the first compressed neural network to the client device;
obtain a residual between at least a subset of the first compressed neural network and at least a subset of the second compressed neural network in response to receiving, from the client device or a third-party device, an indication that the first compressed neural network does not satisfy a performance requirement, wherein the first compressed neural network and the second compressed neural network are configured to perform a same task, wherein the second compressed neural network is obtainable based on adding the residual to the first compressed neural network, and wherein a size and perfomance of the second compressed neural network is higher than a size and performance of the first compressed neural network; and
transmit the residual to the client device.

16. A computer program comprising program code which, when the program is executed by a client device, causes the client device at least to:
transmit a request for a neural network, wherein the request comprises at least one requirement for the neural network;
receive a first compressed neural network;
provide the first compressed neural network for evaluation, wherein the evaluation comprises determining whether the first compressed neural network satisfies a performance requirement; and
receive a residual between the first compressed neural network and a second compressed neural network and reconstruct the second compressed neural network based on adding the residual to the first compressed neural network, wherein the first compressed neural network and the second compressed neural network are configured to perform a same task, and wherein a size and performance of the second compressed neural network is higher than a size and performance of the first compressed neural network.

## Patentansprüche

1. Servervorrichtung, die Folgendes umfasst:
mindestens einen Prozessor; und
mindestens einen Speicher, der einen Computerprogrammcode beinhaltet;
wobei der mindestens eine Speicher und der Computerprogrammcode dazu ausgelegt sind, die Servervorrichtung mit dem mindestens einen Prozessor mindestens zu Folgendem zu veranlassen:
Empfangen einer Anforderung eines neuronalen Netzwerks von einer Clientvorrichtung, wobei die Anforderung mindestens eine Voraussetzung für das neuronale Netzwerk umfasst;
Erhalten eines ersten komprimierten neuronalen Netzwerks auf Basis der mindestens einen Voraussetzung;
Übertragen des ersten komprimierten neuronalen Netzwerks zur Clientvorrichtung;
Erhalten eines Rests zwischen mindestens einem Untersatz des ersten komprimierten neuronalen Netzwerks und mindestens einem Untersatz eines zweiten komprimierten neuronalen Netzwerks in Reaktion auf das Empfangen einer Anzeige, dass das erste komprimierte neuronale Netzwerk eine Leistungsvoraussetzung nicht erfüllt, von der Clientvorrichtung oder einer Drittanbietervorrichtung, wobei das erste komprimierte neuronale Netzwerk und das zweite komprimierte neuronale Netzwerk dazu ausgelegt sind, eine selbe Aufgabe durchzuführen, wobei das zweite komprimierte neuronale Netzwerk auf Basis des Hinzufügens des Rests zum ersten komprimierten neuronalen Netzwerk erhaltbar ist, und wobei eine Größe und eine Leistung des zweiten komprimierten neuronalen Netzwerks höher sind als eine Größe und eine Leistung des ersten komprimierten neuronalen Netzwerks; und
Übertragen des Rests zur Clientvorrichtung.

2. Servervorrichtung nach Anspruch 1**,** wobei der mindestens eine Speicher und der Computerprogrammcode ferner dazu ausgelegt sind, die Servervorrichtung mit dem mindestens einen Prozessor mindestens zu Folgendem zu veranlassen:
Übertragen des ersten komprimierten Netzwerks in einer ersten Vielzahl von Nachrichten, wobei eine erste Nachricht der ersten Vielzahl von Nachrichten den Untersatz des ersten komprimierten neuronalen Netzwerks umfasst, und/oder
Übertragen des zweiten komprimierten neuronalen Netzwerks in einer zweiten Vielzahl von Nachrichten, wobei eine zweite Nachricht der zweiten Vielzahl von Nachrichten den Untersatz des zweiten komprimierten neuronalen Netzwerks umfasst.

3. Servervorrichtung nach Anspruch 2, wobei der Untersatz des ersten komprimierten neuronalen Netzwerks mindestens eine Schicht des ersten komprimierten neuronalen Netzwerks umfasst, und wobei der Untersatz des zweiten komprimierten neuronalen Netzwerks mindestens eine Schicht des zweiten komprimierten neuronalen Netzwerks umfasst.

4. Servervorrichtung nach einem der vorhergehenden Ansprüche, wobei die mindestens eine Voraussetzung mindestens eines von Folgendem umfasst:
einer Größe, die mit dem neuronalen Netzwerk verknüpft ist;
einer Größe, die mit der mindestens einen Schicht des neuronalen Netzwerks verknüpft ist;
einer Größe, die mit Aktivierungen der mindestens einen Schicht des neuronalen Netzwerks verknüpft ist;
einer Kennung der Aufgabe, die vom neuronalen Netzwerk durchzuführen ist;
einer Kennung einer Architektur des neuronalen Netzwerks;
einer Kennung des neuronalen Netzwerks; oder
der Leistungsvoraussetzung für das neuronale Netzwerk.

5. Servervorrichtung nach einem der vorhergehenden Ansprüche, wobei der mindestens eine Speicher und der Computerprogrammcode ferner dazu ausgelegt sind, die Servervorrichtung mit dem mindestens einen Prozessor mindestens zu Folgendem zu veranlassen:
Empfangen einer zweiten Anforderung, die eine Anzeige einer erforderlichen Leistungsverbesserung umfasst, die mindestens eines von Folgendem umfasst, von der Clientvorrichtung:
eine Leistung des ersten komprimierten neuronalen Netzwerks, sofern auf Basis eines Clientdatensatzes beurteilt; oder
einer Differenz zwischen der Leistungsvoraussetzung und der Leistung des ersten komprimierten neuronalen Netzwerks, sofern durch eine Clientvorrichtung im Clientdatensatz beurteilt; und
Erhalten des Rests auf Basis der Anzeige der erforderlichen Leistungsverbesserung.

6. Clientvorrichtung, die Folgendes umfasst:
mindestens einen Prozessor; und
mindestens einen Speicher, der einen Computerprogrammcode beinhaltet;
wobei der mindestens eine Speicher und der Computerprogrammcode dazu ausgelegt sind, die Clientvorrichtung mit dem mindestens einen Prozessor mindestens zu Folgendem zu veranlassen:
Übertragen einer Anforderung eines neuronalen Netzwerks zu einer Servervorrichtung, wobei die Anforderung mindestens eine Voraussetzung für das neuronale Netzwerk umfasst;
Empfangen eines ersten komprimierten neuronalen Netzwerks;
Bereitstellen des ersten komprimierten neuronalen Netzwerks zur Beurteilung, wobei die Beurteilung das Bestimmen umfasst, ob das erste komprimierte neuronalen Netzwerk eine Leistungsvoraussetzung erfüllt; und
Empfangen eines Rests zwischen dem ersten komprimierten neuronalen Netzwerk und einem zweiten komprimierten neuronalen Netzwerk und Rekonstruieren des zweiten komprimierten neuronalen Netzwerks auf Basis des Hinzufügens des Rests zum ersten komprimierten neuronalen Netzwerk, wobei das erste komprimierte neuronale Netzwerk und das zweite komprimierte neuronale Netzwerk dazu ausgelegt sind, eine selbe Aufgabe durchzuführen, und wobei eine Größe und eine Leistung des zweiten komprimierten neuronalen Netzwerks höher sind als eine Größe und eine Leistung des ersten komprimierten neuronalen Netzwerks.

7. Clientvorrichtung nach Anspruch 6**,** wobei der mindestens eine Speicher und der Computerprogrammcode ferner dazu ausgelegt sind, die Clientvorrichtung mit dem mindestens einen Prozessor mindestens zu Folgendem zu veranlassen
Übertragen des ersten komprimierten neuronalen Netzwerks zur Beurteilung zu einer Drittanbietervorrichtung.

8. Clientvorrichtung nach Anspruch 6**,** wobei der mindestens eine Speicher und der Computerprogrammcode ferner dazu ausgelegt sind, die Clientvorrichtung mit dem mindestens einen Prozessor mindestens zu Folgendem zu veranlassen:
Beurteilen des ersten komprimierten neuronalen Netzwerks auf Basis eines lokalen Datensatzes, und
Übertragen einer Anzeige, dass das erste komprimierte neuronale Netzwerk die Leistungsvoraussetzung nicht erfüllt.

9. Clientvorrichtung nach einem der Ansprüche 6 bis 8, wobei der mindestens eine Speicher und der Computerprogrammcode ferner dazu ausgelegt sind, die Clientvorrichtung mit dem mindestens einen Prozessor mindestens zu Folgendem zu veranlassen:
Empfangen des ersten komprimierten Netzwerks in einer ersten Vielzahl von Nachrichten, wobei eine erste Nachricht der ersten Vielzahl von Nachrichten einen Untersatz des ersten komprimierten neuronalen Netzwerks umfasst, und/oder
Empfangen des zweiten komprimierten neuronalen Netzwerks in einer zweiten Vielzahl von Nachrichten, wobei eine zweite Nachricht der zweiten Vielzahl von Nachrichten den Untersatz des zweiten komprimierten neuronalen Netzwerks umfasst.

10. Clientvorrichtung nach Anspruch 9, wobei der mindestens eine Speicher und der Computerprogrammcode ferner dazu ausgelegt sind, die Clientvorrichtung mit dem mindestens einen Prozessor mindestens zu Folgendem zu veranlassen:
Ausführen des Untersatzes des ersten komprimierten neuronalen Netzwerks in Reaktion auf das Empfangen der ersten Nachricht; und/oder
Ausführen des Untersatzes des zweiten komprimierten neuronalen Netzwerks in Reaktion auf das Empfangen der zweiten Nachricht.

11. Clientvorrichtung nach Anspruch 9 oder Anspruch 10, wobei der Untersatz des ersten komprimierten neuronalen Netzwerks mindestens eine Schicht des ersten komprimierten neuronalen Netzwerks umfasst, und wobei der Untersatz des zweiten komprimierten neuronalen Netzwerks mindestens eine Schicht des zweiten komprimierten neuronalen Netzwerks umfasst.

12. Clientvorrichtung nach einem der Ansprüche 6 bis 11, wobei die mindestens eine Voraussetzung für das neuronale Netzwerk mindestens eines von Folgendem umfasst:
einer Größe, die mit dem neuronalen Netzwerk verknüpft ist;
einer Größe, die mit der mindestens einen Schicht des neuronalen Netzwerks verknüpft ist;
einer Größe, die mit Aktivierungen der mindestens einen [Schicht] des neuronalen Netzwerks verknüpft ist;
einer Kennung der Aufgabe, die vom neuronalen Netzwerk durchzuführen ist;
einer Kennung einer Architektur des neuronalen Netzwerks;
einer Kennung des neuronalen Netzwerks; oder
der Leistungsvoraussetzung.

13. Verfahren, das Folgendes umfasst:
Empfangen einer Anforderung eines neuronalen Netzwerks durch eine Servervorrichtung von einer Clientvorrichtung, wobei die Anforderung mindestens eine Voraussetzung für das neuronale Netzwerk umfasst;
Erhalten eines ersten komprimierten neuronalen Netzwerks durch die Servervorrichtung auf Basis der mindestens einen Voraussetzung;
Übertragen des ersten komprimierten neuronalen Netzwerks durch die Servervorrichtung zur Clientvorrichtung;
Erhalten eines Rests zwischen mindestens einem Untersatz des ersten komprimierten neuronalen Netzwerks und mindestens einem Untersatz eines zweiten komprimierten neuronalen Netzwerks durch die Servervorrichtung in Reaktion auf das Empfangen einer Anzeige, dass das erste komprimierte neuronale Netzwerk eine Leistungsvoraussetzung nicht erfüllt, von der Clientvorrichtung oder einer Drittanbietervorrichtung, wobei das erste komprimierte neuronale Netzwerk und das zweite komprimierte neuronale Netzwerk dazu ausgelegt sind, eine selbe Aufgabe durchzuführen, wobei das zweite komprimierte neuronale Netzwerk auf Basis des Hinzufügens des Rests zum ersten komprimierten neuronalen Netzwerk erhaltbar ist, und wobei eine Größe und eine Leistung des zweiten komprimierten neuronalen Netzwerks höher sind als eine Größe und eine Leistung des ersten komprimierten neuronalen Netzwerks; und
Übertragen des Rests durch die Servervorrichtung zur Clientvorrichtung.

14. Verfahren, das Folgendes umfasst:
Übertragen einer Anforderung eines neuronalen Netzwerks durch eine Clientvorrichtung, wobei die Anforderung mindestens eine Voraussetzung für das neuronale Netzwerk umfasst;
Empfangen eines ersten komprimierten neuronalen Netzwerks durch die Clientvorrichtung;
Bereitstellen des ersten komprimierten neuronalen Netzwerks durch die Clientvorrichtung zur Beurteilung, wobei die Beurteilung das Bestimmen umfasst, ob das erste komprimierte neuronale Netzwerk eine Leistungsvoraussetzung erfüllt; und
Empfangen eines Rests zwischen dem ersten komprimierten neuronalen Netzwerk und einem zweiten komprimierten neuronalen Netzwerk durch die Clientvorrichtung und Rekonstruieren des zweiten komprimierten neuronalen Netzwerks durch die Clientvorrichtung auf Basis des Hinzufügens des Rests zum ersten komprimierten neuronalen Netzwerk, wobei das erste komprimierte neuronale Netzwerk und das zweite komprimierte neuronale Netzwerk dazu ausgelegt sind, eine selbe Aufgabe durchzuführen, und wobei eine Größe und eine Leistung des zweiten komprimierten neuronalen Netzwerks höher sind als eine Größe und eine Leistung des ersten komprimierten neuronalen Netzwerks.

15. Computerprogramm, das Programmcode umfasst, der, wenn das Programm von einer Servervorrichtung ausgeführt wird, die Servervorrichtung mindestens zu Folgendem veranlasst:
Empfangen einer Anforderung eines neuronalen Netzwerks von einer Clientvorrichtung, wobei die Anforderung mindestens eine Voraussetzung für das neuronale Netzwerk umfasst;
Erhalten eines ersten komprimierten neuronalen Netzwerks auf Basis der mindestens einen Voraussetzung;
Übertragen des ersten komprimierten neuronalen Netzwerks zur Clientvorrichtung;
Erhalten eines Rests zwischen mindestens einem Untersatz des ersten komprimierten neuronalen Netzwerks und mindestens einem Untersatz des zweiten komprimierten neuronalen Netzwerks in Reaktion auf das Empfangen einer Anzeige, dass das erste komprimierte neuronale Netzwerk eine Leistungsvoraussetzung nicht erfüllt, von der Clientvorrichtung oder einer Drittanbietervorrichtung, wobei das erste komprimierte neuronale Netzwerk und das zweite komprimierte neuronale Netzwerk dazu ausgelegt sind, eine selbe Aufgabe durchzuführen, wobei das zweite komprimierte neuronale Netzwerk auf Basis des Hinzufügens des Rests zum ersten komprimierten neuronalen Netzwerk erhaltbar ist, und wobei eine Größe und eine Leistung des zweiten komprimierten neuronalen Netzwerks höher sind als eine Größe und eine Leistung des ersten komprimierten neuronalen Netzwerks; und
Übertragen des Rests zur Clientvorrichtung.

16. Computerprogramm, das Programmcode umfasst, der, wenn das Programm von einer Clientvorrichtung ausgeführt wird, die Clientvorrichtung mindestens zu Folgendem veranlasst:
Übertragen einer Anforderung eines neuronalen Netzwerks, wobei die Anforderung mindestens eine Voraussetzung für das neuronale Netzwerk umfasst;
Empfangen eines ersten komprimierten neuronalen Netzwerks;
Bereitstellen des ersten komprimierten neuronalen Netzwerks zur Beurteilung, wobei die Beurteilung das Bestimmen umfasst, ob das erste komprimierte neuronalen Netzwerk eine Leistungsvoraussetzung erfüllt; und
Empfangen eines Rests zwischen dem ersten komprimierten neuronalen Netzwerk und einem zweiten komprimierten neuronalen Netzwerk und Rekonstruieren des zweiten komprimierten neuronalen Netzwerks auf Basis des Hinzufügens des Rests zum ersten komprimierten neuronalen Netzwerk, wobei das erste komprimierte neuronale Netzwerk und das zweite komprimierte neuronale Netzwerk dazu ausgelegt sind, eine selbe Aufgabe durchzuführen, und wobei eine Größe und eine Leistung des zweiten komprimierten neuronalen Netzwerks höher sind als eine Größe und eine Leistung des ersten komprimierten neuronalen Netzwerks.

## Revendications

1. Dispositif serveur, comprenant :
au moins un processeur ; et
au moins une mémoire comportant un code de programme informatique ;
l'au moins une mémoire et le code de programme informatique étant configurés pour, avec l'au moins un processeur, amener le dispositif serveur à au moins :
recevoir une demande d'un réseau neuronal en provenance d'un dispositif client, dans lequel la demande comprend au moins une exigence pour le réseau neuronal ;
obtenir un premier réseau neuronal compressé sur la base de l'au moins une exigence ;
transmettre le premier réseau neuronal compressé au dispositif client ;
obtenir un résidu entre au moins un sous-ensemble du premier réseau neuronal compressé et au moins un sous-ensemble d'un deuxième réseau neuronal compressé en réponse à la réception, du dispositif client ou d'un dispositif tiers, d'une indication selon laquelle le premier réseau neuronal compressé ne satisfait pas à une exigence de performance, dans lequel le premier réseau neuronal compressé et le deuxième réseau neuronal compressé sont configurés pour effectuer une même tâche, dans lequel le deuxième réseau neuronal compressé peut être obtenu en ajoutant le résidu au premier réseau neuronal compressé, et dans lequel une taille et une performance du deuxième réseau neuronal compressé sont supérieures à une taille et à une performance du premier réseau neuronal compressé ; et
transmettre le résidu au dispositif client.

2. Dispositif serveur selon la revendication 1, dans lequel
l'au moins une mémoire et le code de programme informatique sont en outre configurés pour, avec l'au moins un processeur, amener le dispositif serveur à au moins :
transmettre le premier réseau compressé dans une première pluralité de messages, dans lequel un premier message de la première pluralité de messages comprend le sous-ensemble du premier réseau neuronal compressé, et/ou
transmettre le deuxième réseau neuronal compressé dans une deuxième pluralité de messages, dans lequel un deuxième message de la deuxième pluralité de messages comprend le sous-ensemble du deuxième réseau neuronal compressé.

3. Dispositif serveur selon la revendication 2, dans lequel le sous-ensemble du premier réseau neuronal compressé comprend au moins une couche du premier réseau neuronal compressé, et dans lequel le sous-ensemble du deuxième réseau neuronal compressé comprend au moins une couche du deuxième réseau neuronal compressé.

4. Dispositif serveur selon l'une des revendications précédentes, dans lequel l'au moins une exigence comprend au moins une parmi :
une taille associée au réseau neuronal ;
une taille associée à au moins une couche du réseau neuronal ;
une taille associée à des activations de l'au moins une couche du réseau neuronal ;
un identifiant de la tâche à réaliser par le réseau neuronal ;
un identifiant d'une architecture du réseau neuronal ;
un identifiant du réseau neuronal ; ou
l'exigence de performance pour le réseau neuronal.

5. Dispositif serveur selon l'une des revendications précédentes,
dans lequel l'au moins une mémoire et le code de programme informatique sont en outre configurés pour, avec l'au moins un processeur, amener le dispositif serveur à au moins :
recevoir, du dispositif client, une deuxième demande comprenant une indication d'une amélioration de performance requise comprenant au moins une parmi :
une performance du premier réseau neuronal compressé, lorsqu'elle est évaluée sur la base d'un ensemble de données client ; ou
une différence entre l'exigence de performance et la performance du premier réseau neuronal compressé, lorsqu'elle est évaluée par le dispositif client sur l'ensemble de données client ; et
obtenir le résidu sur la base de l'indication de l'amélioration de performance requise.

6. Dispositif client comprenant :
au moins un processeur ; et
au moins une mémoire comportant un code de programme informatique ; l'au moins une mémoire et le code de programme informatique étant configurés pour, avec l'au moins un processeur, amener le dispositif client à au moins :
transmettre une demande d'un réseau neuronal un dispositif serveur, dans lequel la demande comprend au moins une exigence pour le réseau neuronal ;
recevoir un premier réseau neuronal compressé ;
fournir le premier réseau neuronal compressé pour évaluation, dans lequel l'évaluation comprend le fait de déterminer si le premier réseau neuronal compressé satisfait à une exigence de performance ; et
recevoir un résidu entre le premier réseau neuronal compressé et un deuxième réseau neuronal compressé, et reconstruire le deuxième réseau neuronal compressé en ajoutant le résidu au premier réseau neuronal compressé, dans lequel le premier réseau neuronal compressé et le deuxième réseau neuronal compressé sont configurés pour effectuer une même tâche, et dans lequel une taille et une performance du deuxième réseau neuronal compressé sont supérieures à une taille et à une performance du premier réseau neuronal compressé.

7. Dispositif client selon la revendication 6, dans lequel l'au moins une mémoire et le code de programme informatique sont en outre configurés pour, avec l'au moins un processeur, amener le dispositif client à au moins transmettre le premier réseau neuronal compressé pour évaluation à un dispositif tiers.

8. Dispositif client selon la revendication 6, dans lequel l'au moins une mémoire et le code de programme informatique sont en outre configurés pour, avec l'au moins un processeur, amener le dispositif client à au moins :
évaluer le premier réseau neuronal compressé sur la base d'un ensemble de données locales, et
transmettre une indication selon laquelle le premier réseau neuronal compressé ne satisfait pas à l'exigence de performance.

9. Dispositif client selon l'une des revendications 6 à 8,
dans lequel l'au moins une mémoire et le code de programme informatique sont en outre configurés pour, avec l'au moins un processeur, amener le dispositif client à au moins :
recevoir le premier réseau compressé dans une première pluralité de messages, dans lequel un premier message de la première pluralité de messages comprend un sous-ensemble du premier réseau neuronal compressé, et/ou
recevoir le deuxième réseau neuronal compressé dans une deuxième pluralité de messages, dans lequel un deuxième message de la deuxième pluralité de messages comprend le sous-ensemble du deuxième réseau neuronal compressé.

10. Dispositif client selon la revendication 9, dans lequel l'au moins une mémoire et le code de programme informatique sont en outre configurés pour, avec l'au moins un processeur, amener le dispositif client à au moins :
exécuter le sous-ensemble du premier réseau neuronal compressé en réponse à la réception du premier message ; et/ou
exécuter le sous-ensemble du deuxième réseau neuronal compressé, en réponse à la réception du deuxième message.

11. Dispositif client selon la revendication 9 ou la revendication 10,
dans lequel le sous-ensemble du premier réseau neuronal compressé comprend au moins une couche du premier réseau neuronal compressé, et dans lequel le sous-ensemble du deuxième réseau neuronal compressé comprend au moins une couche du deuxième réseau neuronal compressé.

12. Dispositif client selon l'une des revendications 6 à 11,
dans lequel l'au moins une exigence pour le réseau neuronal comprend au moins une parmi :
une taille associée au réseau neuronal ;
une taille associée à au moins une couche du réseau neuronal ;
une taille associée à des activations de l'au moins une [couche] du réseau neuronal ;
un identifiant de la tâche à réaliser par le réseau neuronal ;
un identifiant d'une architecture du réseau neuronal ;
un identifiant du réseau neuronal ; ou
l'exigence de performance.

13. Procédé, comprenant les étapes suivantes :
recevoir, par un dispositif serveur, une demande d'un réseau neuronal en provenance d'un dispositif client, dans lequel la demande comprend au moins une exigence pour le réseau neuronal ;
obtenir, par le dispositif serveur, un premier réseau neuronal compressé sur la base de l'au moins une exigence ;
transmettre, par le dispositif serveur, le premier réseau neuronal compressé au dispositif client ;
obtenir, par le dispositif serveur, un résidu entre au moins un sous-ensemble du premier réseau neuronal compressé et au moins un sous-ensemble d'un deuxième réseau neuronal compressé en réponse à la réception, du dispositif client ou d'un dispositif tiers, d'une indication selon laquelle le premier réseau neuronal compressé ne satisfait pas à une exigence de performance, dans lequel le premier réseau neuronal compressé et le deuxième réseau neuronal compressé sont configurés pour effectuer une même tâche, dans lequel le deuxième réseau neuronal compressé peut être obtenu en ajoutant le résidu au premier réseau neuronal compressé, et dans lequel une taille et une performance du deuxième réseau neuronal compressé sont supérieures à une taille et à une performance du premier réseau neuronal compressé ; et
transmettre, par le dispositif serveur, le résidu au dispositif client.

14. Procédé, comprenant les étapes suivantes :
transmettre, par un dispositif client, une demande d'un réseau neuronal, dans lequel la demande comprend au moins une exigence pour le réseau neuronal ;
recevoir, par le dispositif client, un premier réseau neuronal compressé ;
fournir, par le dispositif client, le premier réseau neuronal compressé pour évaluation, dans lequel l'évaluation comprend le fait de déterminer si le premier réseau neuronal compressé satisfait à une exigence de performance ; et
recevoir, par le dispositif client, un résidu entre le premier réseau neuronal compressé et un deuxième réseau neuronal compressé, et reconstruire, par le dispositif client, le deuxième réseau neuronal compressé en ajoutant le résidu au premier réseau neuronal compressé, dans lequel le premier réseau neuronal compressé et le deuxième réseau neuronal compressé sont configurés pour effectuer une même tâche, et dans lequel une taille et une performance du deuxième réseau neuronal compressé sont supérieures à une taille et à une performance du premier réseau neuronal compressé.

15. Programme informatique comprenant un code de programme qui, lorsque le programme est exécuté par un dispositif serveur, amène le dispositif serveur à au moins :
recevoir une demande d'un réseau neuronal en provenance d'un dispositif client, dans lequel la demande comprend au moins une exigence pour le réseau neuronal ;
obtenir un premier réseau neuronal compressé sur la base de l'au moins une exigence ;
transmettre le premier réseau neuronal compressé au dispositif client ;
obtenir un résidu entre au moins un sous-ensemble du premier réseau neuronal compressé et au moins un sous-ensemble du deuxième réseau neuronal compressé en réponse à la réception, du dispositif client ou d'un dispositif tiers, d'une indication selon laquelle le premier réseau neuronal compressé ne satisfait pas à une exigence de performance, dans lequel le premier réseau neuronal compressé et le deuxième réseau neuronal compressé sont configurés pour effectuer une même tâche, dans lequel le deuxième réseau neuronal compressé peut être obtenu en ajoutant le résidu au premier réseau neuronal compressé, et dans lequel une taille et une performance du deuxième réseau neuronal compressé sont supérieures à une taille et à une performance du premier réseau neuronal compressé ; et
transmettre le résidu au dispositif client.

16. Programme informatique comprenant un code de programme qui, lorsque le programme est exécuté par un dispositif client, amène le dispositif client à au moins :
transmettre une demande d'un réseau neuronal, dans lequel la demande comprend au moins une exigence pour le réseau neuronal ;
recevoir un premier réseau neuronal compressé ;
fournir le premier réseau neuronal compressé pour évaluation, dans lequel l'évaluation comprend le fait de déterminer si le premier réseau neuronal compressé satisfait à une exigence de performance ; et
recevoir un résidu entre le premier réseau neuronal compressé et un deuxième réseau neuronal compressé, et reconstruire le deuxième réseau neuronal compressé en ajoutant le résidu au premier réseau neuronal compressé, dans lequel le premier réseau neuronal compressé et le deuxième réseau neuronal compressé sont configurés pour effectuer une même tâche, et dans lequel une taille et une performance du deuxième réseau neuronal compressé sont supérieures à une taille et à une performance du premier réseau neuronal compressé.
